# EUROPÄISCHE PATENTSCHRIFT

(11) **EP 2 674 657 B1**
(45) Veröffentlichungstag und Bekanntmachung des Hinweises auf die Patenterteilung: **09.11.2016**
(21) Anmeldenummer: 13171341.4
(22) Anmeldetag: 11.06.2013
(51) Int. Cl.: F16L 25/10, E21F 1/06, F16L 31/00, F24F 13/02, F16L 21/02

(54) **Verfahren zum Verbinden zweier flexibler Gebinde**
Method for connecting two flexible containers
Procédé destiné à relier deux enveloppes flexibles

(30) Priorität: 15.06.2012 DE 102012105233
(43) Veröffentlichungstag der Anmeldung: 18.12.2013
(73) Patentinhaber: FLECOTEC AG, 79379 Müllheim (DE)
(72) Erfinder: Untch, Günter, 79379 Müllheim (DE); Lais, Peter, 79379 Müllheim (DE); Koch, Martin, 79395 Neuenburg (DE)
(74) Vertreter: Bartels & Partner

(56) Entgegenhaltungen:
- DE-A1- 3 709 365
- DE-C- 704 629
- US-A- 1 525 538
- US-A- 2 410 786
- US-A- 4 015 961

## Beschreibung

Die Erfindung betrifft ein Verfahren zum Verbinden zweier flexibler Gebinde mit den Merkmalen im Oberbegriff von Anspruch 1.

Aus dem Stand der Technik sind Vorrichtungen zum kontaminationsfreien Andocken flexibler Gebinde hinlänglich bekannt, beispielsweise aus EP 1 656 311 B1. Bekannte Vorrichtungen bestehen jedoch meist aus mehreren Elementen, die aufwändig miteinander zu kombinieren sind, um ein flexibles Gebinde möglichst umweltdicht mit einem Flansch oder einem anderen Gebinde zu verbinden. Dabei wird das flexible Gebinde zwischen wenigstens zwei Elementen eingespannt. Das Einspannen wird durch Hilfsmittel unterstützt, beispielsweise durch einen umlaufenden Spannring, der die Elemente gemeinsam umgreift.

Die DE 37 09 365 A1 und die US 1 525 538 zeigen Verfahren zum Verbinden zweier flexibler Gebinde, insbesondere zum umweltdichten Verbinden zweier offener Schlauchfolienenden, auf mit zumindest den Verfahrensschritten Umstülpen eines ersten offenen Endes eines ersten flexiblen Gebindes um einen ersten Ring, Umstülpen eines zweiten offenen Endes eines zweiten flexiblen Gebindes um einen zweiten Ring, nachfolgendes Einführen des ersten Ringes durch den zweiten Ring hindurch in das zweite flexible Gebinde hinein, nachfolgendes paralleles und koaxiales Ausrichten der Ringe zueinander und abschließendes Zuranlagebringen der Ringe mit dazwischen eingeklemmten Enden, wobei der Ring als zweiter Ring auf seiner Innenseite eine umlaufende Einbuchtung aufweist, die gespiegelt zu der Rundung eines runden Querschnitts des ersten Rings entsprechend ausgebildet ist. Die Ringe sind jeweils aus zwei ringförmigen Abschnitten gebildet, die durch einen Verbindungssteg beabstandet sind. Auf diese Weise wird eine radial nach innen oder außen weisende Einbuchtung gebildet.

Weitere Verfahren und Ringe zum Verbinden zweier flexibler Gebinde gehen aus der DE 704 629 und der US 4 015 961 hervor.

US2410786A offenbart ein Verfahren gemäß dem Oberbegriff des Anspruchs 1.

Die der Erfindung zugrundeliegende Aufgabe besteht darin, zwei offene Schlauchfolienenden gleichen Durchmessers reversibel mit möglichst wenig Aufwand möglichst dicht miteinander zu verbinden.

Diese Aufgabe wird erfindungsgemäß durch ein Verfahren mit den Merkmalen des Patentanspruchs 1 gelöst. Eine vorteilhafte Ausführungsform ist im Unteranspruch 2 angegeben.

Gemäß Anspruch 1 ist vorgesehen, dass die Einbuchtung zu einer axialen Seite hin offen angeordnet ist.

Der Ring ist derart gestaltet, dass beim Zuranlagebringen ein Verrastungszustand erreicht wird.

Die Außenfläche des ersten Ringes und die Innenfläche des zweiten Ringes sind wenigstens teilweise kongruent zueinander ausgebildet, sodass die Enden in einem Verrastungszustand zwischen den kongruent zueinander ausgebildeten Flächen einklemmbar sind. Der Innenring ist von der Anschlussseite her in den Außenring einsetzbar.

Der zweite Ring weist radial innen eine vollständig umlaufende, nach radial innen offene Aufnahmenut mit einem runden Querschnitt auf. Der erste Ring ist gemäß dieser Ausführungsform einteilig und in einem Bereich der Außenfläche mit einem runden Querschnitt ausgebildet. Der erste Ring besteht aus einem einzigen, derart flexiblen Material, dass der erste Ring zum Erreichen des Verrastungszustands in die Aufnahmenut einschnappen kann.

Es wird für jedes flexible Gebinde mit einem offenen Ende, insbesondere für jedes offene Schlauchfolienende zweier grundsätzlich einander entsprechender Schlauchfolien gleichen Durchmessers, ein flexibler Ring um das jeweilige offene Ende gestülpt.

Eines der um einen ersten der Ringe gestülpten offenen Enden eines ersten Gebindes wird leicht schräg durch das andere umgestülpte offene Ende-im Weiteren zweites Ende genannt - eines zweiten Gebindes zum Erreichen eines eingeführten Zustands in das zweite Gebinde eingeführt, wobei eine Elastizität des zumindest ersten Rings das Einführen erst ermöglicht.

Im eingeführten Zustand werden die Ringe parallel zueinander ausgerichtet und anschließend durch Zug an den Enden die Ringe mit zumindest einer einer Linie angenäherten schmalen Umfangsfläche aber immer vollumfänglich zur Anlage gebracht.

Das Verfahren ist manuell wie maschinell mit einfachen Mitteln, die wenige Teile umfassen, umsetzbar. Das Verfahren gewährleistet zusätzliche Sicherheit gegen ein unkontrolliertes Lösen der Ringe aus dem Zustand, der nach dem Zuranlagebringen erreicht war.

Erfindungsgemäß hergestellte Verbindungen zwischen flexiblen Gebinden wurden bereits erfolgreich auf Dichtigkeit getestet. Die Konstruktion ist hin-sichtlich Dichtigkeit dynamisch, d.h. mit zunehmendem Druck erhöht sich die Dichtigkeit. Die Ringe werden mit steigendem Druck synchron mit steigender Kraft aneinandergedrückt.

Die Ringe bestehen vorzugsweise aus den Kunststoffen Polyoxymethylen (PON), Polyethylen (PE) oder Polyamid (PA).

Die Erfindung wird nachfolgend anhand von Figuren näher erläutert. Es zeigen:
- Fig. 1: zwei parallel zueinander ausgerichtete Ringe gemäß einem ersten Ausführungsbeispiel mit umgestülpten Enden flexibler Gebinde;
- Fig. 2: zwei parallel zueinander ausgerichtete Ringe gemäß einem zweiten Ausführungsbeispiel mit umgestülpten Enden flexibler Gebinde;
- Fig. 3: ein Einführen eines ersten der Ringe gemäß erstem Ausführungsbeispiel durch den zweiten Ring hindurch;
- Fig. 4: parallel zueinander ausgerichtete Ringe gemäß erstem Ausführungsbeispiel nach dem Einführen;
- Fig. 5: die Ringe mit offenen Enden aus Fig. 4 nach einem Zuranlagebringen; und
- Fig. 6: eine der Fig. 5 analoge Darstellung von Ringen gemäß zweitem Ausführungsbeispiel in einem Verrastungszustand.

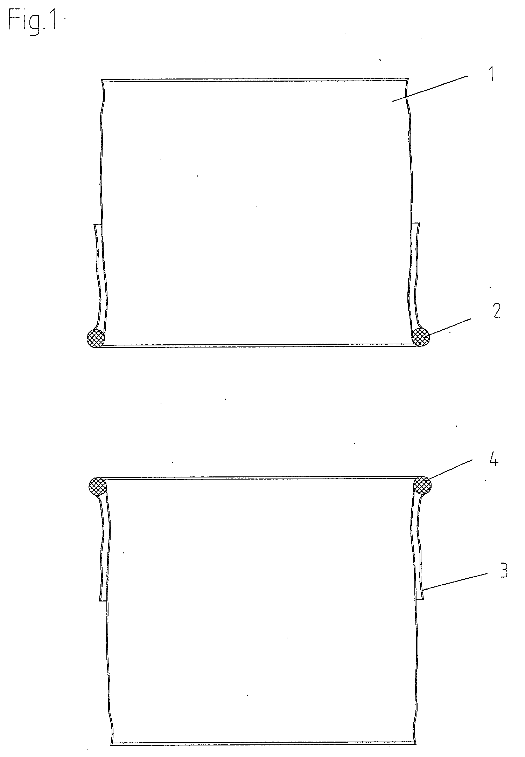

Die Fig. 1 und 3 bis 5 dienen lediglich der Erläuterung des Hintergrundes der Erfindung. Das darin gezeigte Ausführungsbeispiel ist nicht Gegenstand eines Anspruchs.

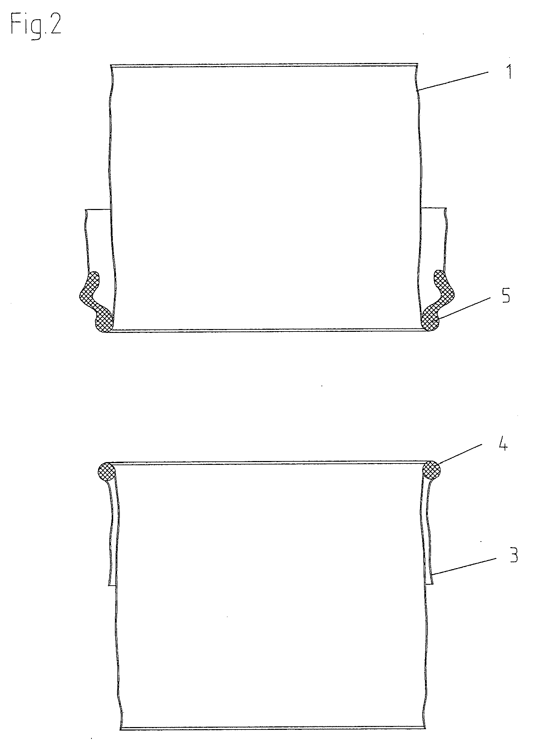

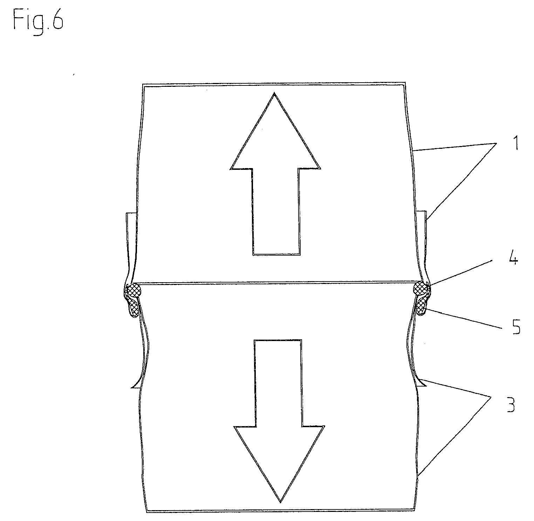

Die Fig. 1 bis 6 verdeutlichen Verfahren zum Verbinden flexibler Gebinde 1, 3 in zwei Ausführungsbeispielen. Die Fig. 1 und 3 bis 5 beziehen sich auf mehrere Zustände des Verfahrens gemäß einem ersten Ausführungsbeispiel. Die Fig. 2 und 6 beziehen sich auf den Beginn und den Abschluss des Verfahrens gemäß einem zweiten Ausführungsbeispiel, nach welchem ein Verrastungszustand erreicht wird (Fig. 6).

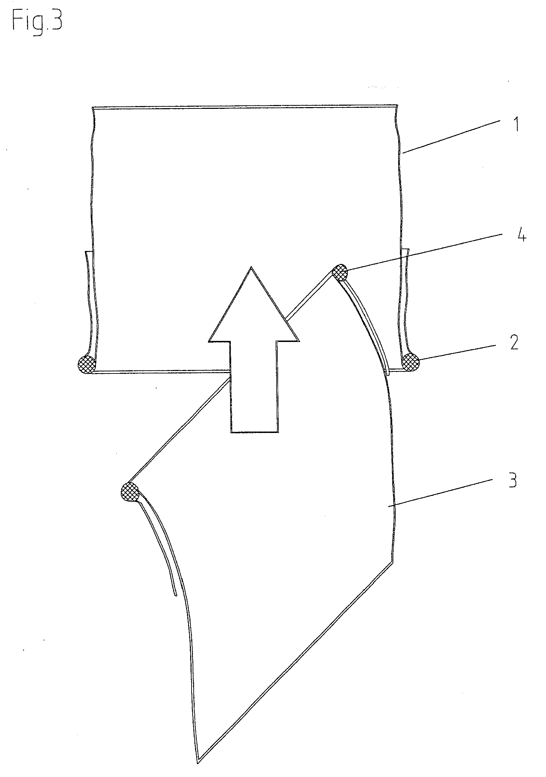

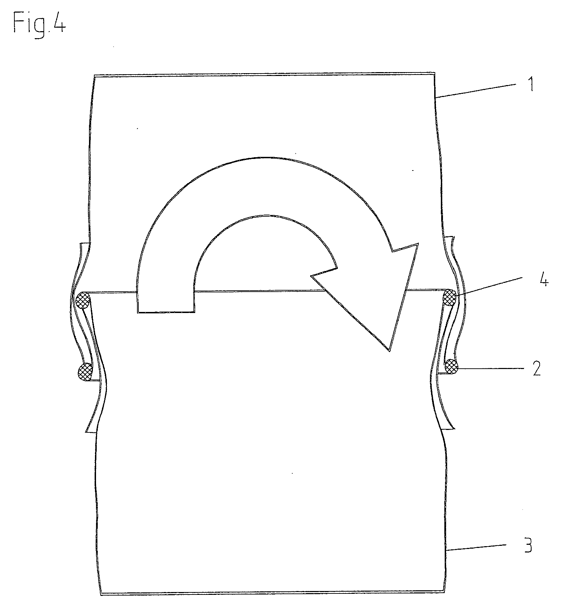

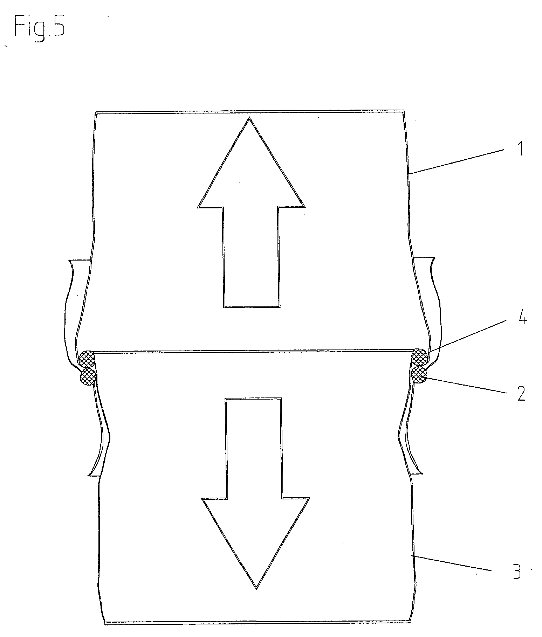

Das Verfahren ist insbesondere geeignet zum umweltdichten Verbinden zweier Endlosschlauchfolien. Fig. 1 und Fig. 2 zeigen einen Beginn des Verfahrens mit parallel zueinander ausgerichteten Ringen 2; 5, 4 und darum umgestülpten offenen Enden der flexiblen Gebinde 1, 3. Fig. 3 zeigt ein nachfolgendes Einführen eines ersten Ringes 4 durch einen zweiten Ring 2; 5 hindurch in das zweite flexible Gebinde 1 hinein. In dem zweiten Gebinde 1 erfolgt einschließlich ein paralleles und koaxiales Ausrichten der Ringe 2; 5, 4 zueinander, Ergebnis in Fig. 4 dargestellt. Abschließend erfolgt ein Zuranlagebringen der Ringe 2; 5, 4 mit dazwischen eingeklemmten Enden, vgl. Fig. 5 und 6.

Beim Verfahren gem. zweitem Ausführungsbeispiel gem. den Fig. 2 und 6 wird beim Zuranlagebringen ein Verrastungszustand erreicht (Fig. 6).

Die Ringe 2, 4 gem. Fig. 1 und 3 bis 5 sind identisch ausgebildet.

Im Unterschied dazu ergänzen die Ringe 5, 4 gem. den Fig. 2 und 6 einander, wobei der als zweiter Ring 5 im Verfahren nach dem zweiten Ausführungsbeispiel auf seiner Innenseite eine umlaufende Einbuchtung aufweist, die gespiegelt zu der Rundung eines runden Querschnitts des ersten Rings 4 entsprechend ausgebildet ist.

Die Einbuchtung ist zu einer axialen Seite des zweiten Ringes 5 hin offen angeordnet. Der zweite Ring 5 weist im Querschnitt gesehen auf etwa der Position 1 Uhr eine Überhöhung auf, sodass ein Eintrittsquerschnitt gebildet ist, der im Verhältnis zum Außendurchmesser des ersten Rings kleiner ist. So ist ein Abschluss des Verfahrens gemäß einer vorteilhaften Ausführungsform mit einem Verrastungszustand erreicht.

## Patentansprüche

1. Verfahren zum Verbinden zweier flexibler Gebinde (1, 3), insbesondere zum umweltdichten Verbinden zweier offener Schlauchfolienenden, mit zumindest den Verfahrensschritten Umstülpen eines ersten offenen Endes eines ersten flexiblen Gebindes (3) um einen ersten Ring (4), Umstülpen eines zweiten offenen Endes eines zweiten flexiblen Gebindes (1) um einen zweiten Ring (5), nachfolgendes Einführen des ersten Ringes (4) durch den zweiten Ring (5) hindurch in das zweite flexible Gebinde (1) hinein, nachfolgendes paralleles und koaxiales Ausrichten der Ringe (5, 4) zueinander und abschließendes Zuranlagebringen der Ringe (5, 4) mit dazwischen eingeklemmten Enden, **dadurch gekennzeichnet, dass** der zweite Ring (5) auf seiner Innenseite eine umlaufende Einbuchtung aufweist, die gespiegelt zu der Rundung eines runden Querschnitts des ersten Rings entsprechend ausgebildet ist, und dass die Einbuchtung zu einer axialen Seite hin offen angeordnet ist.

2. Verfahren nach Anspruch 1, **dadurch gekennzeichnet, dass** der zweite Ring (5) im Querschnitt gesehen auf etwa der Position 1 Uhr eine Überhöhung aufweist, sodass ein Eintrittsquerschnitt gebildet ist, der im Verhältnis zum Außendurchmesser des ersten Rings kleiner ist.

## Claims

1. A method for connecting two flexible containers (1, 3), in particular for connecting two open tubular film ends such as to be sealed off from the environment, comprising at the very least the procedural steps of everting a first open end of a first flexible container (3) around a first ring (4), everting a second open end of a second flexible container (1) around a second ring (5), subsequently inserting the first ring (4) through the second ring (5) into the second flexible container (1), subsequently aligning the rings (5, 4) in a parallel and coaxial relationship to one another, and finally abutting the rings (5, 4) with the ends clamped in between them, **characterised in that** the second ring (5) has on its inside an encircling indentation which is formed accordingly to mirror the rounding of a round cross-section of the first ring, and that the indentation is arranged to be open towards an axial side.

2. The method according to Claim 1, **characterised in that** the second ring (5), viewed in cross-section, has a superelevation at approximately a one o'clock position such that an entry cross-section is formed which is smaller than the outer diameter of the first ring.

## Revendications

1. Procédé de liaison de deux enveloppes (1, 3) souples, notamment de liaison étanche au milieu ambiant de deux extrémités ouvertes de feuilles de tuyau souples comprenant, au moins les stades de procédé, retroussement d'un première extrémité ouverte de la première enveloppe (3) souple autour d'une première bague (4), retroussement d'une deuxième extrémité ouverte d'une deuxième enveloppe (1) souple autour d'une deuxième bague (5), introduction ensuite de la première bague (4) à travers la deuxième bague (5) dans la deuxième enveloppe (1) souple, ensuite orientation parallèle et coaxiale des bagues (5, 4) l'une par rapport à l'autre, et finalement mise en appui des bagues (5, 4) avec des extrémités collées entre elles, **caractérisé en ce que** la deuxième bague (5) a, sur sa face intérieure, une bosse rentrante faisant le tour qui est constituée en reflétant l'arrondi d'une section transversale arrondie de la première bague, et **en ce que** la bosse rentrante est ouverte vers un côté axial.

2. Procédé suivant la revendication 1, **caractérisé en ce que** la deuxième bague (5) a, considérée en section transversale, une surélévation à peu près à la position 1 heure, de manière à former une section transversale d'entrée qui est plus petite que le diamètre extérieur de la première bague.
